# EUROPEAN PATENT APPLICATION

(11) **EP 3 489 949 A1**
(43) Date of publication of application: **29.05.2019**
(21) Application number: 17830659.3
(22) Date of filing: 12.04.2017
(51) Int. Cl.: G10L 15/22

(54) **INFORMATION PROCESSING DEVICE AND INFORMATION PROCESSING METHOD**

(30) Priority: 19.07.2016 JP 2016141126
(71) Applicant: Sony Corporation, Tokyo 108-0075 (JP)
(72) Inventor: TAKI, Yuhei, Tokyo 108-0075 (JP); KAWANO, Shinichi, Tokyo 108-0075 (JP)
(74) Representative: MFG Patentanwälte Meyer-Wildhagen Meggle-Freund Gerhard PartG mbB
(86) International application number: PCT/JP2017/014916
(87) International publication number: WO 2018/016139

(57) **Abstract**

There is provided an information processing apparatus including: a determination unit configured to determine a factor that possibly causes an error in speech recognition, on the basis of a result of the speech recognition and information regarding an utterance; and a notification control unit configured to cause the determined factor to be notified.

## Description

### Technical Field

The present disclosure relates to an information processing apparatus and an information processing method.

### Background Art

A technology that corrects an error in a result of speech recognition in a case where the error exists in the result is developed. Examples of the technology mentioned above include the technology described in Patent Literature 1 below.

### Citation List

### Patent Literature

Patent Literature 1: JP 2010-55044AA

### Disclosure of Invention

### Technical Problem

In view of the fact that there are technologies that correct an error of a result of speech recognition, such as the technology described in Patent Literature 1, errors may occur in speech recognition due to various factors. In a case where a technology like the above that corrects an error of a result of speech recognition is used, the error is corrected, and therefore there is a possibility that the speaker can make an utterance without concern for factors that cause an error in speech recognition.

However, even if a technology like the above that corrects an error of a result of speech recognition is used, the speaker is not notified of a factor that has caused an error in the speech recognition. Further, even if a technology like the above that corrects an error of a result of speech recognition is used, there may be a case where a speech recognition result that the speaker intended is not obtained due to an event in which an error of a result of speech recognition cannot be corrected, an event in which a corrected result is in error, etc., for example. Hence, even if a technology like the above that corrects an error of a result of speech recognition is used, a situation where convenience for the speaker is impaired occurs, such as "a situation where, even if the speaker repeats an utterance of the same content many times in order to alter results of speech recognition, a result of speech recognition that the speaker expects is not obtained."

The present disclosure proposes a new and improved information processing apparatus and a new and improved information processing method that can improve convenience for a speaker.

### Solution to Problem

According to the present disclosure, there is provided an information processing apparatus including: a determination unit configured to determine a factor that possibly causes an error in speech recognition, on the basis of a result of the speech recognition and information regarding an utterance; and a notification control unit configured to cause the determined factor to be notified.

In addition, according to the present disclosure, there is provided an information processing method to be executed by an information processing apparatus, the information processing method including: a step of determining a factor that possibly causes an error in speech recognition, on the basis of a result of the speech recognition and information regarding an utterance; and a step of causing the determined factor to be notified.

### Advantageous Effects of Invention

According to the present disclosure, convenience for a speaker can be improved.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram showing a first example of notification of a factor derived from sound volume according to the present embodiment.
FIG. 2 is an explanatory diagram showing a second example of notification of a factor derived from sound volume according to the present embodiment.
FIG. 3 is an explanatory diagram showing an example of notification of a factor derived from environmental noise according to the present embodiment.
FIG. 4 is an explanatory diagram showing a first example of notification of a factor derived from utterance speed according to the present embodiment.
FIG. 5 is an explanatory diagram showing a second example of notification of a factor derived from utterance speed according to the present embodiment.
FIG. 6 is an explanatory diagram showing a first example of notification of a factor derived from speech recognition processing according to the present embodiment.
FIG. 7 is an explanatory diagram showing a second example of notification of a factor derived from speech recognition processing according to the present embodiment.
FIG. 8 is an explanatory diagram showing a third example of notification of a factor derived from speech recognition processing according to the present embodiment.
FIG. 9 is an explanatory diagram showing an example of notification of a plurality of factors according to the present embodiment.
FIG. 10 is a flow chart showing an example of processing according to an information processing method according to the present embodiment.
FIG. 11 is a flow chart showing an example of processing according to an information processing method according to the present embodiment.
FIG. 12 is an explanatory diagram showing an example of an information processing system according to the present embodiment including an information processing apparatus according to the present embodiment.
FIG. 13 is a block diagram showing an example of a configuration of an information processing apparatus according to the present embodiment.
FIG. 14 is an explanatory diagram showing an example of a hardware configuration of an information processing apparatus according to the present embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, in the following, the description is given in the order shown below.
1. Information processing method according to present embodiment
2. Information processing apparatus according to present embodiment
3. Program according to present embodiment

### (Information processing method according to present embodiment)

First, an information processing method according to the present embodiment is described. In the following, a case where processing according to the information processing method according to the present embodiment is performed by an information processing apparatus according to the present embodiment is used as an example.

### [1] Overview of information processing method according to present embodiment

As described above, errors may occur in speech recognition due to various factors. Further, in a case where the speaker cannot grasp a factor that may cause an error in speech recognition, the speaker does not know what to do in order for a result of speech recognition to be altered, and hence a situation like that described above where convenience for the speaker is impaired may occur.

Thus, the information processing apparatus according to the present embodiment determines a factor that may cause an error in speech recognition (hereinafter, occasionally referred to as simply a "factor"). Then, the information processing apparatus according to the present embodiment causes the determined factor to be notified.

By the information processing apparatus according to the present embodiment determining a factor that may cause an error in speech recognition and causing the determined factor to be notified, the speaker who has received the notification can grasp the factor that may cause an error in speech recognition, for example. Further, by grasping the factor that may cause an error in speech recognition, the speaker who has received the notification can understand more easily what to do in order for a result of speech recognition to be altered.

Hence, by the information processing apparatus according to the present embodiment determining a factor that may cause an error in speech recognition and causing the determined factor to be notified, the possibility that a situation like that described above where convenience for the speaker is impaired will occur can be reduced.

Therefore, convenience for the speaker can be improved by processing according to the information processing method according to the present embodiment being performed.

More specifically, the information processing apparatus according to the present embodiment performs determination processing and notification control processing shown below, as processing according to the information processing method according to the present embodiment.

### (1) Determination processing

The information processing apparatus according to the present embodiment determines a factor that may cause an error in speech recognition, on the basis of a result of speech recognition and information regarding an utterance.

The result of speech recognition related to the present embodiment is, for example, a result of speech recognition processing that obtains characters showing utterance content (or a character string, the same applies hereinafter) from an audio signal (a digital signal or an analog signal) including an uttered voice of the speaker being performed. Data showing characters showing utterance content are given as a result of speech recognition.

Here, the audio signal including an uttered voice of the speaker is generated by a voice input device such as a microphone. The voice input device mentioned above may be a device included in the information processing apparatus according to the present embodiment, or may be a device outside the information processing apparatus according to the present embodiment.

Further, speech recognition processing may be performed by the information processing apparatus according to the present embodiment, or may be performed in an external apparatus of the information processing apparatus according to the present embodiment.

As the information regarding an utterance related to the present embodiment, for example, one or two or more of the pieces of information shown below are given.
- Information showing the sound volume of an utterance
- Information showing environmental noise
- Information showing utterance speed
- Information regarding speech recognition processing

Examples of the information showing the sound volume of an utterance related to the present embodiment include data in which the sound volume of an uttered voice of the speaker shown by an audio signal including the uttered voice is converted into numbers, and waveform data of an uttered voice of the speaker. Processing related to the generation of information showing the sound volume of an utterance may be performed by the information processing apparatus according to the present embodiment, or may be performed in an external apparatus of the information processing apparatus according to the present embodiment. The processing related to the generation of information showing the sound volume of an utterance may include, for example, arbitrary signal processing that uses a filter or the like to cause an uttered voice and noise to be separated from an audio signal. Note that the method for separating an uttered voice and noise is not limited to the examples shown above, and an uttered voice and noise may be caused to be separated on the basis of a plurality of audio signals that are generated individually by a plurality of voice input devices.

Note that the information showing the sound volume of an utterance related to the present embodiment is not limited to the examples shown above. For example, the information showing the sound volume of an utterance may include data showing the distance between the voice input device and the speaker. The distance between the voice input device and the speaker is acquired by, for example, "a distance sensor of an arbitrary system that is installed in the vicinity of the voice input device and is capable of detecting the distance to an object in a specific sound collection direction in the voice input device," or the like.

Examples of the information showing environmental noise related to the present embodiment include data in which the sound volume of environmental noise is converted into numbers. Processing related to the generation of information showing environmental noise may be performed by the information processing apparatus according to the present embodiment, or may be performed in an external apparatus of the information processing apparatus according to the present embodiment. The processing related to the generation of information showing environmental noise includes, for example, arbitrary processing that is capable of causing an uttered voice and noise to be separated on the basis of an audio signal, such as signal processing that uses a filter or the like to cause an uttered voice and noise to be separated from an audio signal.

Examples of the information showing utterance speed related to the present embodiment include data in which the sound volume of utterance speed is converted into numbers. Processing related to the generation of information showing utterance speed may be performed by the information processing apparatus according to the present embodiment, or may be performed in an external apparatus of the information processing apparatus according to the present embodiment. Examples of processing related to the generation of information showing utterance speed include arbitrary processing that is capable of estimating utterance speed, such as processing that estimates utterance speed on the basis of the amount of change in a spectrum of an audio signal showing the uttered voice. In addition, the processing related to the generation of information showing utterance speed may include, for example, arbitrary processing that is capable of causing an uttered voice and noise to be separated on the basis of an audio signal, such as signal processing that uses a filter or the like to cause an uttered voice and noise to be separated from an audio signal.

Examples of the information regarding speech recognition processing related to the present embodiment include data showing the number of options in a result of speech recognition in speech recognition processing and data showing the degree of confidence of a result of speech recognition in speech recognition processing. Here, examples of the number of options mentioned above include the number of options of result of speech recognition in which linguistically impossible recognition results are excluded, and the number of options of result of speech recognition that include linguistically impossible recognition results. The method for calculating each of the number of options mentioned above and the degree of confidence mentioned above depends on an algorithm (or a speech recognition engine) capable of performing speech recognition processing.

As the information regarding an utterance related to the present embodiment, for example, one or two or more of the pieces of information shown above are given. An example of determination processing using information regarding an utterance like the above is described later.

The information processing apparatus according to the present embodiment determines factors for each prescribed unit in a result of speech recognition, for example.

Examples of the prescribed unit in a result of speech recognition related to the present embodiment include a unit obtained by a result of speech recognition being divided by an arbitrary method, such as a phrase, a word, or a unit obtained by division by morpheme analysis or the like. In the following, a case where the prescribed unit in a result of speech recognition is a phrase is mainly used as an example.

Note that the information processing apparatus according to the present embodiment may determine factors for the whole of a result of speech recognition.

### (2) Notification control processing

The information processing apparatus according to the present embodiment causes a factor determined by the determination processing mentioned above to be notified.

The information processing apparatus according to the present embodiment causes a determined factor to be visually notified by, for example, causing the determined factor to be displayed on a display screen of a display device. The display device mentioned above may be a device included in the information processing apparatus according to the present embodiment, or may be a device outside the information processing apparatus according to the present embodiment.

The information processing apparatus according to the present embodiment causes a determined factor to be visually notified by, for example, transmitting a control signal including a display instruction and data showing notification content to a display device. The transmission of the control signal mentioned above is performed via a communication device included in the information processing apparatus according to the present embodiment or an external communication device connected to the information processing apparatus according to the present embodiment, for example.

Further, the information processing apparatus according to the present embodiment may cause a determined factor to be auditorily notified by causing a voice showing the determined factor to be outputted from a voice output device such as a loudspeaker, for example. The voice output device mentioned above may be a device included in the information processing apparatus according to the present embodiment, or may be a device outside the information processing apparatus according to the present embodiment.

The information processing apparatus according to the present embodiment causes a determined factor to be auditorily notified by, for example, transmitting a control signal including an output instruction and voice data showing notification content to a voice output device. The transmission of the control signal mentioned above is performed via a communication device included in the information processing apparatus according to the present embodiment or the like, for example.

Note that the notification control processing according to the present embodiment is not limited to the examples shown above. For example, the information processing apparatus according to the present embodiment may cause a determined factor to be notified by both the visual notification mentioned above and the auditory notification mentioned above.

In a case where factors are determined for each prescribed unit in a result of speech recognition in the determination processing mentioned above, the information processing apparatus according to the present embodiment causes the factors to be notified for each prescribed unit in the result of speech recognition, for example. Further, in a case where factors are determined for the whole of a result of speech recognition in the determination processing mentioned above, the information processing apparatus according to the present embodiment causes the factors to be notified for the whole of the result of speech recognition. Note that an example of notification of a determined factor by notification control processing according to the present embodiment being performed is described later.

The information processing apparatus according to the present embodiment performs the determination processing mentioned above and the notification control processing mentioned above as processing according to the information processing method according to the present embodiment, for example.

By processing according to the information processing method according to the present embodiment being performed, a factor that may cause an error in speech recognition is determined, and the determined factor is notified. Hence, as described above, the speaker who has received the notification can grasp the factor that may cause an error in speech recognition, and can therefore understand more easily what to do in order for a result of speech recognition to be altered, for example.

Further, in a case where the information processing apparatus according to the present embodiment causes determined factors to be notified for each prescribed unit in a result of speech recognition, the speaker who has received the notification can be caused to understand more easily what place in the utterance to alter, for example.

Therefore, by the determination processing mentioned above and the notification control processing mentioned above being performed as processing according to the information processing method according to the present embodiment, the possibility that a situation like that described above where convenience for the speaker is impaired will occur can be reduced, for example. Further, convenience for the speaker can be improved by processing according to the information processing method according to the present embodiment being performed.

Note that the determination processing mentioned above and the notification control processing mentioned above are pieces of processing obtained by dividing processing according to the information processing method according to the present embodiment, for the sake of convenience. Hence, in processing according to the information processing method according to the present embodiment, the determination processing mentioned above and the notification control processing mentioned above may be seen as one piece of processing, for example. Further, processing according to the information processing method according to the present embodiment may be seen as three or more pieces of processing in accordance with an arbitrary division way, for example.

### [2] Example of processing according to information processing method according to present embodiment

Next, processing according to the information processing method according to the present embodiment is described more specifically.

In the following, a case where a determined factor is visually notified by notification control processing according to the information processing method according to the present embodiment is used as an example.

Further, in the following, a case where factors are determined for each phrase (an example of a prescribed unit) in a result of speech recognition and the determined factors are notified for each of the phrases is used as an example.

Furthermore, in the following, a case where the language of the utterance is English is used as an example. Note that the language for which processing according to the information processing method according to the present embodiment can be used is not limited to English. Processing according to the information processing method according to the present embodiment can be used for any language in which a result of speech recognition can be obtained by speech recognition processing, such as Japanese, German, French, Spanish, or Chinese.

### [2-1] First example of processing according to information processing method: processing related to notification of factor derived from sound volume

An example of processing that causes a factor derived from sound volume to be notified will now be described as processing according to a first example.

Here, the factor derived from sound volume related to the present embodiment is the sound volume of an utterance being too large or the sound volume of an utterance being too small. The sound volume of an utterance being too large falls under crackling occurring, for example. Further, the sound volume of an utterance being too small falls under the collection of uttered sounds not being performed by a voice input device such as a microphone, for example.

### [2-1-1] First example of determination processing

The information processing apparatus according to the present embodiment determines a factor derived from sound volume on the basis of information showing the sound volume of an utterance (an example of information regarding an utterance).

First, an example in which the sound volume of an utterance being too large is determined as a factor derived from sound volume is described.

In a case where the sound volume of an utterance being too large is determined as a factor derived from sound volume, the information processing apparatus according to the present embodiment compares sound volume (a numerical value) shown by information showing the sound volume of an utterance and a set threshold, and determines whether the sound volume of the utterance is too large or not, for example. In a case where sound volume shown by information showing the sound volume of an utterance is larger than a prescribed threshold (or in a case where the sound volume is more than or equal to the prescribed threshold), the information processing apparatus according to the present embodiment determines that the sound volume of the utterance is too large. The case where it is determined that the sound volume of an utterance is too large falls under a case where a factor derived from sound volume exists.

Here, as the threshold related to the determination of the sound volume of an utterance being too large, for example, one of a value associated with the speaker, a value settled on the basis of attributes of the speaker, and a value independent of the speaker is given.

Examples of the value associated with the speaker related to the determination of the sound volume of an utterance being too large include a value obtained by adding a prescribed adjusting value to the average value of the sound volume in the whole of an utterance of the speaker. The adjusting value mentioned above may be a fixed value that is set in advance, or may be a variable value that can change on the basis of manipulation by the user or the like of the information processing apparatus according to the present embodiment, the distance between the voice input device and the speaker, etc.

Further, the value associated with the speaker related to the determination of the sound volume of an utterance being too large may be a threshold that is set in advance in a table (or a database) or the like in which IDs corresponding to speakers and thresholds are associated together, for example. The information processing apparatus according to the present embodiment specifies the value associated with the speaker on the basis of an ID of the speaker identified by authentication of an arbitrary system or the like, such as face authentication based on a captured image, and the table mentioned above in which IDs corresponding to speakers and thresholds are associated together, for example. The table mentioned above in which IDs corresponding to speakers and thresholds are associated together is stored in a storage unit (described later) included in the information processing apparatus according to the present embodiment or a recording medium such as a recording medium outside the information processing apparatus according to the present embodiment, for example.

Examples of the value settled on the basis of attributes of the speaker related to the determination of the sound volume of an utterance being too large include a value associated with attributes of the speaker like those shown below and a value found in accordance with an arbitrary algorithm from attributes of the speaker like those shown below. Note that it goes without saying that examples of attributes of the speaker related to the determination of the sound volume of an utterance being too large are not limited to the examples shown above.
- The distinction of sex of the speaker
- The age (or generation) of the speaker
- A combination of these

The distinction of sex and the age (or generation) of the speaker mentioned above are estimated from a captured image in which the speaker is imaged by an imaging device, for example. The imaging device mentioned above may be a device included in the information processing apparatus according to the present embodiment, or may be a device outside the information processing apparatus according to the present embodiment. Note that the processing that estimates attributes of the speaker (or the processing that specifies attributes of the speaker), which processing is related to the determination of the sound volume of an utterance being too large, is not limited to the above, and may be arbitrary processing capable of estimating attributes of the speaker. Further, processing that estimates attributes of the speaker (or processing that specifies attributes of the speaker) may be performed by the information processing apparatus according to the present embodiment, or may be performed in an external apparatus of the information processing apparatus according to the present embodiment.

Examples of the value independent of the speaker include a fixed value that is set in advance and a variable value that can change on the basis of manipulation or the like by the user or the like of the information processing apparatus according to the present embodiment.

Note that the processing that determines the sound volume of an utterance being too large is not limited to the examples shown above.

For example, the information processing apparatus according to the present embodiment may determine the sound volume of an utterance being too large by detecting a set prescribed waveform pattern from a waveform pattern of the uttered voice of the speaker shown by information showing the sound volume of the utterance. For example, in a case where a clipped waveform (an example of a prescribed waveform pattern) is detected from a waveform pattern of an uttered voice, the information processing apparatus according to the present embodiment determines that the sound volume of the utterance is too large.

Next, an example in which the sound volume of an utterance being too small is determined as a factor derived from sound volume is described.

In a case where the sound volume of an utterance being too small is determined as a factor derived from sound volume, the information processing apparatus according to the present embodiment compares sound volume (a numerical value) shown by information showing the sound volume of an utterance and a set threshold, and determines whether the sound volume of the utterance is too small or not, for example. In a case where sound volume shown by information showing the sound volume of an utterance is smaller than a prescribed threshold (or in a case where the sound volume is less than or equal to the prescribed threshold), the information processing apparatus according to the present embodiment determines that the sound volume of the utterance is too small. The case where it is determined that the sound volume of an utterance is too small falls under a case where a factor derived from sound volume exists.

Here, as the threshold related to the determination of the sound volume of an utterance being too small, for example, one of a value associated with the speaker, a value settled on the basis of attributes of the speaker, and a value independent of the speaker is given.

Examples of the value associated with the speaker related to the determination of the sound volume of an utterance being too small include a value obtained by subtracting a prescribed adjusting value to the average value of the sound volume in the whole of an utterance of the speaker. The adjusting value mentioned above may be a fixed value that is set in advance, or may be a variable value that can change on the basis of manipulation by the user or the like of the information processing apparatus according to the present embodiment, the distance between the voice input device and the speaker, etc. Further, the adjusting value related to the determination of the sound volume of an utterance being too small and the adjusting value related to the determination of the sound volume of an utterance being too large described above may be the same, or may be different.

Further, the value associated with the speaker related to the determination of the sound volume of an utterance being too small may be a threshold that is set in advance in a table (or a database) or the like in which IDs corresponding to speakers and thresholds are associated together, similarly to the value associated with the speaker related to the determination of the sound volume of an utterance being too large, for example.

Examples of the value settled on the basis of attributes of the speaker related to the determination of the sound volume of an utterance being too small include a value associated with attributes of the speaker like those shown below and a value found in accordance with an arbitrary algorithm from attributes of the speaker like those shown below. Note that it goes without saying that examples of attributes of the speaker related to the determination of the sound volume of an utterance being too small are not limited to the examples shown above.
- The distinction of sex of the speaker
- The age (or generation) of the speaker
- A combination of these

Examples of the value independent of the speaker include a fixed value that is set in advance and a variable value that can change on the basis of manipulation or the like by the user or the like of the information processing apparatus according to the present embodiment.

Note that the processing that determines the sound volume of an utterance being too small is not limited to the examples shown above.

For example, in a case where information showing the sound volume of an utterance includes data showing the distance between the voice input device and the speaker, the information processing apparatus according to the present embodiment may determine the sound volume of the utterance being too small on the basis of the distance between the voice input device and the speaker. For example, in a case where the distance between the voice input device and the speaker is larger than a threshold related to a set distance (or in a case where the distance is more than or equal to the threshold), the information processing apparatus according to the present embodiment determines that the sound volume of the utterance is too small. Examples of the threshold related to the distance include a fixed value that is set in advance and a variable value that can change on the basis of manipulation or the like by the user or the like of the information processing apparatus according to the present embodiment.

### [2-1-2] First example of notification control processing

The information processing apparatus according to the present embodiment causes a determined factor derived from sound volume to be notified.

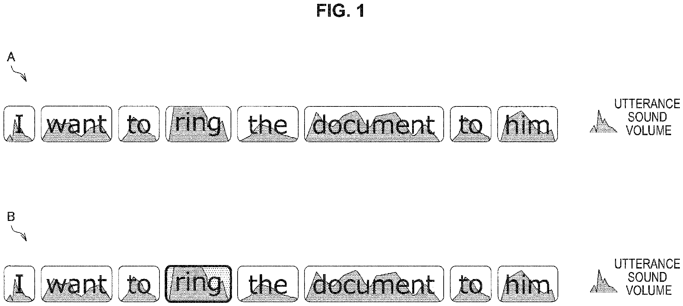

FIG. 1 is an explanatory diagram showing a first example of notification of a factor derived from sound volume according to the present embodiment, and shows an example in a case where the fact that there is a possibility that an error will have occurred in speech recognition due to the sound volume of the utterance being too large is visually notified.

FIG. 1 shows a case where, when the speaker has made the utterance of "I want to bring the document to him," the result of speech recognition is "I want to ring the document to him," that is, a case where an error has occurred in the portion of "ring" of the result of speech recognition.

The information processing apparatus according to the present embodiment causes the sound volume of the utterance (hereinafter, occasionally referred to as "utterance sound volume") to be displayed for each phrase, for example. FIG. 1 shows an example in which the information processing apparatus according to the present embodiment leaves a waveform corresponding to utterance sound volume to be displayed for each phrase. Here, an audio signal including the uttered voice of the speaker and the result of speech recognition are associated together by a speech recognition engine or the like for performing speech recognition processing, for example.

For example, as shown in the portion of "ring" of A of FIG. 1, the information processing apparatus according to the present embodiment causes the waveform of the portion where it is determined that the sound volume of the utterance is too large, to be displayed as a clipped waveform, and thereby visually notifies that there is a possibility that an error will have occurred in the speech recognition due to the sound volume of the utterance being too large.

Further, for example as shown in the portion of "ring" of B of FIG. 1, the information processing apparatus according to the present embodiment may cause the portion where it is determined that a factor derived from sound volume exists, to be highlighted by color-coding the portion where it is determined that a factor derived from sound volume exists and the other portions, causing a frame to be displayed on the portion where it is determined that a factor derived from sound volume exists, or the like.

Note that it goes without saying that examples in a case of visually notifying that there is a possibility that an error will have occurred in speech recognition due to the sound volume of an utterance being too large are not limited to the examples shown in FIG. 1.

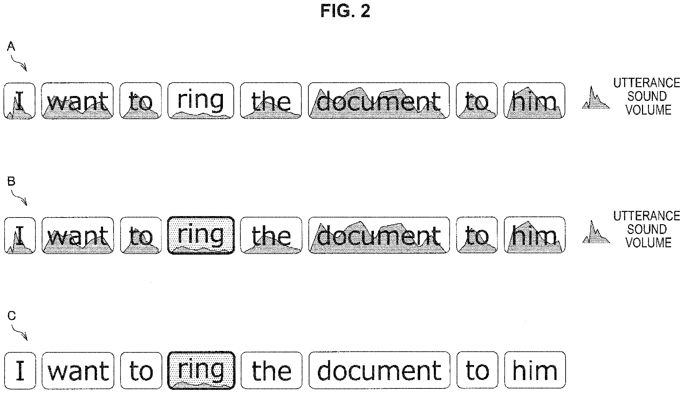

FIG. 2 is an explanatory diagram showing a second example of notification of a factor derived from sound volume according to the present embodiment, and shows an example in a case where the fact that there is a possibility that an error will have occurred in speech recognition due to the sound volume of the utterance being too small is visually notified.

FIG. 2 shows a case where, when the speaker has made the utterance of "I want to bring the document to him," the result of speech recognition is "I want to ring the document to him," that is, a case where an error has occurred in the portion of "ring" of the result of speech recognition.

The information processing apparatus according to the present embodiment causes utterance sound volume to be displayed for each phrase, for example. FIG. 2 shows an example in which the information processing apparatus according to the present embodiment leaves a waveform corresponding to utterance sound volume to be displayed for each phrase, like in the examples shown in FIG. 1.

For example, as shown in the portion of "ring" of A of FIG. 2, the information processing apparatus according to the present embodiment causes the waveform of the portion where it is determined that the sound volume of the utterance is too large, to be displayed smaller than another waveform, and thereby visually notifies that there is a possibility that an error will have occurred in the speech recognition due to the sound volume of the utterance being too small.

Further, for example as shown in the portion of "ring" of B of FIG. 2, the information processing apparatus according to the present embodiment may cause the portion where it is determined that a factor derived from sound volume exists, to be highlighted by color-coding the portion where it is determined that a factor derived from sound volume exists and the other portions, causing a frame to be displayed on the portion where it is determined that a factor derived from sound volume exists, or the like.

Further, for example as shown in the portion of "ring" of C of FIG. 2, the information processing apparatus according to the present embodiment may cause a waveform corresponding to utterance sound volume to be displayed only for the portion where it is determined that a factor derived from sound volume exists, and may further cause only this portion to be highlighted. That is, the information processing apparatus according to the present embodiment may cause only the portion where there is a possibility that an error will have occurred in speech recognition due to a factor derived from sound volume, to be notified.

Note that it goes without saying that examples in a case of visually notifying that there is a possibility that an error will have occurred in speech recognition due to the sound volume of an utterance being too small are not limited to the examples shown in FIG. 2.

### [2-2] Second example of processing according to information processing method: processing related to notification of factor derived from environmental noise

An example of processing that causes a factor derived from environmental noise to be notified will now be described as processing according to a second example.

Here, the factor derived from environmental noise related to the present embodiment is environmental noise being too large, for example. Environmental noise being too large falls under environmental noise being large enough to affect the result of speech recognition, for example.

### [2-2-1] Second example of determination processing

The information processing apparatus according to the present embodiment determines a factor derived from environmental noise on the basis of information showing environmental noise (an example of information regarding an utterance), for example.

The information processing apparatus according to the present embodiment compares the sound volume (a numerical value) of environmental noise shown by information showing environmental noise and a set threshold, and determines whether the sound volume of environmental noise is large or not, for example. In a case where the sound volume of environmental noise shown by information showing environmental noise is larger than a prescribed threshold (or in a case where the sound volume is more than or equal to the prescribed threshold), the information processing apparatus according to the present embodiment determines that the sound volume of environmental noise is large. The case where it is determined that the sound volume of environmental noise is large falls under a case where a factor derived from environmental noise exists.

Here, the threshold related to comparison with the sound volume of environmental noise may be a fixed value that is set in advance, or may be a variable value that varies with the ratio between the sound volume of environmental noise and the average value of the sound volume of environmental noise in the whole of an utterance of the speaker, or the like, for example.

Note that the determination processing according to the second example is not limited to the examples shown above.

For example, the information processing apparatus according to the present embodiment may determine a factor derived from environmental noise on the basis of information showing the sound volume of an utterance (an example of information regarding an utterance) and information showing environmental noise (an example of information regarding an utterance), for example.

The information processing apparatus according to the present embodiment calculates the signal-to-noise ratio (S/N ratio) on the basis of sound volume (a numerical value) shown by information showing the sound volume of an utterance and the sound volume (a numerical value) of environmental noise shown by information showing environmental noise, for example. Then, the information processing apparatus according to the present embodiment compares the calculated S/N ratio and a set threshold, and determines whether the sound volume of environmental noise is large or not. In a case where the S/N ratio is smaller than a prescribed threshold (or in a case where the S/N ratio is less than or equal to the prescribed threshold), the information processing apparatus according to the present embodiment determines that the sound volume of environmental noise is large.

Here, the threshold related to comparison with the S/N ratio may be a fixed value that is set in advance, or may be a variable value that varies with the sound volume of an utterance or the like, for example.

### [2-2-2] Second example of notification control processing

The information processing apparatus according to the present embodiment causes a determined factor derived from environmental noise to be notified.

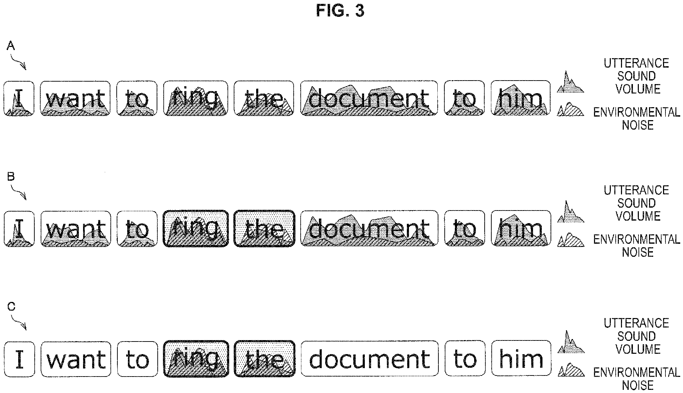

FIG. 3 is an explanatory diagram showing an example of notification of a factor derived from environmental noise according to the present embodiment, and shows an example in a case where the fact that there is a possibility that an error will have occurred in speech recognition due to the environmental noise being too large is visually notified.

FIG. 3 shows a case where, when the speaker has made the utterance of "I want to bring the document to him," the result of speech recognition is "I want to ring the document to him," that is, a case where an error has occurred in the portion of "ring" of the result of speech recognition.

The information processing apparatus according to the present embodiment causes utterance sound volume and the sound volume of environmental noise to be displayed for each phrase, for example. FIG. 3 shows an example in which the information processing apparatus according to the present embodiment leaves a waveform corresponding to utterance sound volume and a waveform corresponding to the sound volume of environmental noise to be displayed for each phrase.

For example, as shown in the portion of "ring" and the portion of "the" of A of FIG. 3, the information processing apparatus according to the present embodiment causes the portion where it is determined that noise is large, to be displayed in such a manner that the overlapping portion of the region defined by a waveform corresponding to utterance sound volume and the region defined by a waveform corresponding to the sound volume of environmental noise is larger than the overlapping portions of the other portions. By causing the overlapping portion to be displayed as shown in A of FIG. 3, the information processing apparatus according to the present embodiment can visually notify that there is a possibility that an error will have occurred in the speech recognition due to the S/N ratio mentioned above being small, that is, noise being too large.

Further, for example as shown in the portion of "ring" of B of FIG. 3 and the portion of "the", the information processing apparatus according to the present embodiment may cause the portion where it is determined that a factor derived from environmental noise exists, to be highlighted by color-coding the portion where it is determined that a factor derived from environmental noise exists and the other portions, causing a frame to be displayed on the portion where it is determined that a factor derived from environmental noise exists, or the like.

Further, for example as shown in the portion of "ring" of C of FIG. 3 and the portion of "the", the information processing apparatus according to the present embodiment may cause a waveform corresponding to utterance sound volume and the like to be displayed only for the portion where it is determined that a factor derived from environmental noise exists, and may further cause only this portion to be highlighted. That is, the information processing apparatus according to the present embodiment may cause only the portion where there is a possibility that an error will have occurred in speech recognition due to a factor derived from environmental noise, to be notified.

Note that it goes without saying that examples in a case of visually notifying that there is a possibility that an error will have occurred in speech recognition due to a factor derived from environmental noise are not limited to the examples shown in FIG. 3.

### [2-3] Third example of processing according to information processing method: processing related to notification of factor derived from utterance speed

An example of processing that causes a factor derived from utterance speed to be notified will now be described as processing according to a third example.

Here, the factor derived from utterance speed related to the present embodiment is utterance speed being too fast or utterance speed being too slow, for example. Utterance speed being too fast falls under utterance speed being fast enough to affect the result of speech recognition, for example. Further, utterance speed being too slow falls under utterance speed being slow enough to affect the result of speech recognition, for example.

### [2-3-1] Third example of determination processing

The information processing apparatus according to the present embodiment determines a factor derived from utterance speed on the basis of information showing utterance speed (an example of information regarding an utterance), for example.

First, an example in which utterance speed being too fast is determined as a factor derived from utterance speed is described.

In a case where utterance speed being too fast is determined as a factor derived from utterance speed, the information processing apparatus according to the present embodiment determines a factor derived from utterance speed by, for example, comparing utterance speed (a numerical value) shown by information showing utterance speed and a standard value of utterance speed. In a case where utterance speed shown by information showing utterance speed is larger than a standard value (or in a case where the utterance speed is more than or equal to the standard value), the information processing apparatus according to the present embodiment determines that utterance speed is too fast. The case where it is determined that utterance speed is too fast falls under a case where a factor derived from utterance speed exists.

Here, the standard value related to the determination of utterance speed being too fast falls under a threshold related to the determination of utterance speed being too fast. Further, as the standard value related to the determination of utterance speed being too fast, for example, one of a value associated with the speaker, a value settled on the basis of attributes of the speaker, and a value independent of the speaker is given.

Examples of the value associated with the speaker related to the determination of the speed of an utterance being too fast include a value obtained by adding a prescribed adjusting value to the average value of the speed in the whole of an utterance of the speaker. The adjusting value mentioned above may be a fixed value that is set in advance, or may be a variable value that can change on the basis of manipulation by the user or the like of the information processing apparatus according to the present embodiment, the distance between the voice input device and the speaker, etc.

Further, the value associated with the speaker related to the determination of the speed of an utterance being too fast may be a standard value that is set in advance in a table (or a database) or the like in which IDs corresponding to speakers and standard values are associated together, for example. The information processing apparatus according to the present embodiment specifies the value associated with the speaker on the basis of an ID of the speaker identified by authentication of an arbitrary system or the like, such as face authentication based on a captured image, and the table mentioned above in which IDs corresponding to speakers and standard values are associated together, for example. The table mentioned above in which IDs corresponding to speakers and standard values are associated together is stored in a storage unit (described later) included in the information processing apparatus according to the present embodiment or a recording medium, for example.

Examples of the value settled on the basis of attributes of the speaker related to the determination of the speed of an utterance being too fast include a value associated with attributes of the speaker like those shown below and a value found in accordance with an arbitrary algorithm from attributes of the speaker like those shown below. Note that it goes without saying that examples of attributes of the speaker related to the determination of the speed of an utterance being too fast are not limited to the examples shown above.
- The distinction of sex of the speaker
- The age (or generation) of the speaker
- A community that the speaker belongs to
- A combination of these

The distinction of sex and the age (or generation) of the speaker mentioned above are estimated from a captured image in which the speaker is imaged by an imaging device, for example. Further, the above-mentioned community that the speaker belongs to is inferred (or specified) on the basis of an ID or the like of the speaker identified by authentication of an arbitrary system or the like, for example. Note that the processing that estimates attributes of the speaker (or the processing that specifies attributes of the speaker), which processing is related to the determination of the speed of an utterance being too fast, is not limited to the above, and may be arbitrary processing capable of estimating attributes of the speaker. Processing that estimates attributes of the speaker (or processing that specifies attributes of the speaker) may be performed by the information processing apparatus according to the present embodiment, or may be performed in an external apparatus of the information processing apparatus according to the present embodiment as described above.

Examples of the value independent of the speaker include a fixed value that is set in advance and a variable value that can change on the basis of manipulation or the like by the user or the like of the information processing apparatus according to the present embodiment. Further, the value independent of the speaker may be a value obtained by adding a prescribed adjusting value to the average value of utterance speeds in utterances of a plurality of speakers.

Next, an example in which utterance speed being too slow is determined as a factor derived from utterance speed is described.

In a case where utterance speed being too slow is determined as a factor derived from utterance speed, the information processing apparatus according to the present embodiment determines a factor derived from utterance speed by, for example, comparing utterance speed (a numerical value) shown by information showing utterance speed and a standard value of utterance speed. In a case where utterance speed shown by information showing utterance speed is smaller than a standard value (or in a case where the utterance speed is less than or equal to the standard value), the information processing apparatus according to the present embodiment determines that utterance speed is too slow. The case where it is determined that utterance speed is too slow falls under a case where a factor derived from utterance speed exists.

Here, the standard value related to the determination of utterance speed being too slow falls under a threshold related to the determination of utterance speed being too slow. Further, as the standard value related to the determination of utterance speed being too slow, for example, one of a value associated with the speaker, a value settled on the basis of attributes of the speaker, and a value independent of the speaker is given.

Examples of the value associated with the speaker related to the determination of the speed of an utterance being too slow include a value obtained by subtracting a prescribed adjusting value to the average value of the speed in the whole of an utterance of the speaker. The adjusting value mentioned above may be a fixed value that is set in advance, or may be a variable value that can change on the basis of manipulation by the user or the like of the information processing apparatus according to the present embodiment, the distance between the voice input device and the speaker, etc. Further, the adjusting value related to the determination of the speed of an utterance being too slow and the adjusting value related to the determination of the speed of an utterance being too fast described above may be the same, or may be different.

Further, the value associated with the speaker related to the determination of the speed of an utterance being too slow may be a standard value that is set in advance in a table (or a database) or the like in which IDs corresponding to speakers and standard values are associated together, similarly to the value associated with the speaker related to the determination of the speed of an utterance being too fast, for example.

Examples of the value settled on the basis of attributes of the speaker related to the determination of the speed of an utterance being too slow include a value associated with attributes of the speaker like those shown below and a value found in accordance with an arbitrary algorithm from attributes of the speaker like those shown below. Note that it goes without saying that examples of attributes of the speaker related to the determination of the speed of an utterance being too slow are not limited to the examples shown above.
- The distinction of sex of the speaker
- The age (or generation) of the speaker
- A community that the speaker belongs to
- A combination of these

Examples of the value independent of the speaker include a fixed value that is set in advance and a variable value that can change on the basis of manipulation or the like by the user or the like of the information processing apparatus according to the present embodiment. Further, the value independent of the speaker may be a value obtained by subtracting a prescribed adjusting value from the average value of utterance speeds in utterances of a plurality of speakers.

The information processing apparatus according to the present embodiment determines a factor derived from utterance speed by comparing utterance speed shown by information showing utterance speed and a standard value of utterance speed, for example like in the above.

### [2-3-2] Third example of notification control processing

The information processing apparatus according to the present embodiment causes a determined factor derived from utterance speed to be notified.

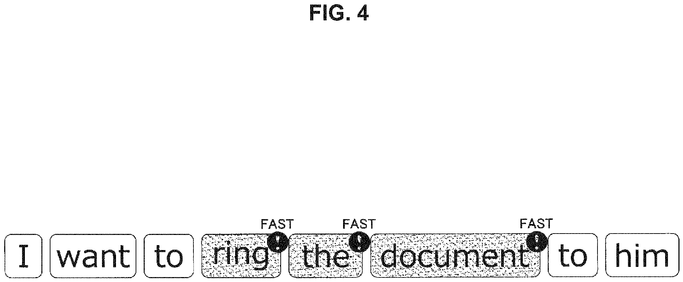

FIG. 4 is an explanatory diagram showing a first example of notification of a factor derived from utterance speed according to the present embodiment, and shows an example in a case of visually notifying that there is a possibility that an error will have occurred in speech recognition due to utterance speed being too fast.

FIG. 4 shows a case where, when the speaker has made the utterance of "I want to bring the document to him," the result of speech recognition is "I want to ring the document to him," that is, a case where an error has occurred in the portion of "ring" of the result of speech recognition.

For example, as shown in the portion of "ring," the portion of "the," and the portion of "document" of FIG. 4, the information processing apparatus according to the present embodiment causes the portion where it is determined that a factor derived from utterance speed exists, to be highlighted by color-coding the portion where it is determined that utterance speed is too fast and the other portions, adding an icon showing that utterance speed is too fast to the portion where it is determined that utterance speed is too fast, or the like.

Note that it goes without saying that examples in a case of visually notifying that there is a possibility that an error will have occurred in speech recognition due to the speed of an utterance being too fast are not limited to the examples shown in FIG. 4.

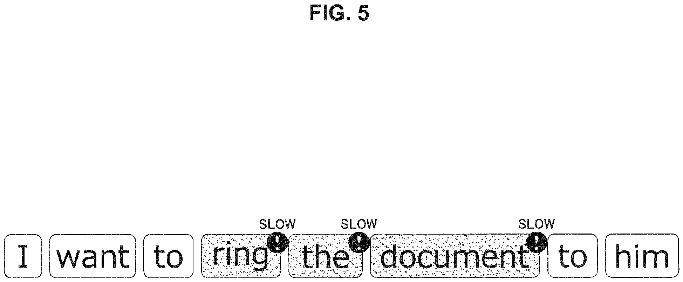

FIG. 5 is an explanatory diagram showing a second example of notification of a factor derived from utterance speed according to the present embodiment, and shows an example in a case of visually notifying that there is a possibility that an error will have occurred in speech recognition due to utterance speed being too slow.

FIG. 5 shows a case where, when the speaker has made the utterance of "I want to bring the document to him," the result of speech recognition is "I want to ring the document to him," that is, a case where an error has occurred in the portion of "ring" of the result of speech recognition.

For example, as shown in the portion of "ring," the portion of "the," and the portion of "document" of FIG. 5, the information processing apparatus according to the present embodiment causes the portion where it is determined that a factor derived from utterance speed exists, to be highlighted by color-coding the portion where it is determined that utterance speed is too slow and the other portions, adding an icon showing that utterance speed is too slow to the portion where it is determined that utterance speed is too fast, or the like.

Note that it goes without saying that examples in a case of visually notifying that there is a possibility that an error will have occurred in speech recognition due to the speed of an utterance being too slow are not limited to the examples shown in FIG. 5.

### [2-4] Fourth example of processing according to information processing method: processing related to notification of factor derived from speech recognition processing

An example of processing that causes a factor derived from speech recognition processing to be notified will now be described as processing according to a fourth example.

Here, the factor derived from speech recognition processing related to the present embodiment is the utterance not being clear, the utterance being hard to recognize, or the degree of confidence of the result of speech recognition being low, for example.

"The utterance not being clear" related to the present embodiment falls under an event in which "the number of options of recognition result obtained on the basis of an uttered voice in speech recognition processing is large enough to affect the result of speech recognition," for example. Here, the number of options of recognition result obtained on the basis of an uttered voice mentioned above falls under the number of options of result of speech recognition including linguistically impossible recognition results described above.

Further, "the utterance being hard to recognize" related to the present embodiment falls under an event in which "the number of options of recognition result that are obtained as a result of excluding, from options of recognition result obtained on the basis of an uttered voice, characters that cannot be options in linguistic terms is large enough to affect the result of speech recognition," for example. Here, the above-mentioned number of options of recognition result that are obtained as a result of excluding characters that cannot be options in linguistic terms falls under the number of options of result of speech recognition in which the linguistically impossible recognition results described above are excluded. For example, a situation where an utterance is hard to recognize may occur due to a situation where there are many homonyms, a situation where a character that is a correct answer does not exist in learning data used for speech recognition, etc.

Further, "the degree of confidence of the result of speech recognition being low" related to the present embodiment falls under an event in which "the degree of confidence of the result of speech recognition that is calculated by an arbitrary algorithm in speech recognition processing is low enough to affect the result of speech recognition," for example.

### [2-4-1] Fourth example of determination processing

The information processing apparatus according to the present embodiment determines a factor derived from speech recognition processing on the basis of information regarding speech recognition processing corresponding to a result of speech recognition (an example of information regarding an utterance), for example.

First, an example in which the utterance not being clear is determined as a factor derived from speech recognition processing is described.

The information processing apparatus according to the present embodiment compares the number of options (hereinafter, occasionally referred to as "a first number of options") of result of speech recognition including linguistically impossible recognition results, which number is shown by information regarding speech recognition processing, and a set threshold, and determines whether the utterance is clear or not, for example. In a case where the first number of options shown by information regarding speech recognition processing is larger than a prescribed threshold (or in a case where the first number of options is more than or equal to the prescribed threshold), the information processing apparatus according to the present embodiment determines that the utterance is not clear. The case where it is determined that the utterance is not clear falls under a case where a factor derived from speech recognition processing exists.

Here, the threshold related to comparison with the first number of options may be a fixed value that is set in advance, or may be a variable value that can change on the basis of manipulation or the like by the user or the like of the information processing apparatus according to the present embodiment, for example.

Next, an example in which the utterance being hard to recognize is determined as a factor derived from speech recognition processing is described.

The information processing apparatus according to the present embodiment compares the number of options (hereinafter, occasionally referred to as "a second number of options") of result of speech recognition in which linguistically impossible recognition results are excluded, which number is shown by information regarding speech recognition processing, and a set threshold, and determines whether the utterance is hard to recognize or not, for example. In a case where the second number of options shown by information regarding speech recognition processing is larger than a prescribed threshold (or in a case where the second number of options is more than or equal to the prescribed threshold), the information processing apparatus according to the present embodiment determines that the utterance is hard to recognize. The case where it is determined that the utterance is hard to recognize falls under a case where a factor derived from speech recognition processing exists.

Here, the threshold related to comparison with the second number of options may be a fixed value that is set in advance, or may be a variable value that can change on the basis of manipulation or the like by the user or the like of the information processing apparatus according to the present embodiment, for example.

Next, an example in which the degree of confidence of the result of speech recognition being low is determined as a factor derived from speech recognition processing is described.

The information processing apparatus according to the present embodiment compares the degree of confidence (a numerical value) shown by information regarding speech recognition processing and a set threshold, and determines whether the degree of confidence of the result of speech recognition is low or not, for example. In a case where the degree of confidence shown by information regarding speech recognition processing is smaller than a prescribed threshold (or in a case where the degree of confidence is less than or equal to the prescribed threshold), the information processing apparatus according to the present embodiment determines that the degree of confidence of the result of speech recognition is low. The case where it is determined that the degree of confidence of the result of speech recognition is low falls under a case where a factor derived from speech recognition processing exists.

Here, the threshold related to comparison with the degree of confidence may be a fixed value that is set in advance, or may be a variable value that can change on the basis of manipulation or the like by the user or the like of the information processing apparatus according to the present embodiment, for example.

### [2-4-2] Fourth example of notification control processing

The information processing apparatus according to the present embodiment causes a determined factor derived from speech recognition processing to be notified.

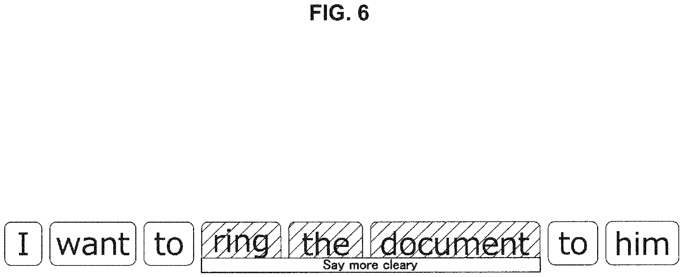

FIG. 6 is an explanatory diagram showing a first example of notification of a factor derived from speech recognition processing according to the present embodiment, and shows an example in a case of visually notifying that there is a possibility that an error will have occurred in speech recognition due to the utterance not being clear.

FIG. 6 shows a case where, when the speaker has made the utterance of "I want to bring the document to him," the result of speech recognition is "I want to ring the document to him," that is, a case where an error has occurred in the portion of "ring" of the result of speech recognition.

For example, as shown in the portion of "ring," the portion of "the," and the portion of "document" of FIG. 6, the information processing apparatus according to the present embodiment causes the portion where it is determined that a factor derived from speech recognition processing exists, to be highlighted by color-coding the portion where it is determined that the utterance is not clear and the other portions, adding an icon including a character string serving as a hint for improvement to the portion where it is determined that the utterance is not clear, or the like.

Note that it goes without saying that examples in a case of visually notifying that there is a possibility that an error will have occurred in speech recognition due to the utterance not being clear are not limited to the example shown in FIG. 6.

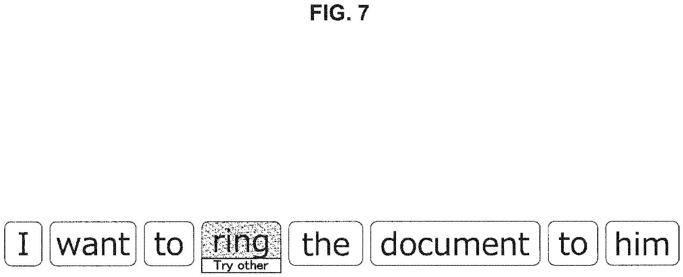

FIG. 7 is an explanatory diagram showing a second example of notification of a factor derived from speech recognition processing according to the present embodiment, and shows an example in a case of visually notifying that there is a possibility that an error will have occurred in speech recognition due to the utterance being hard to recognize.

FIG. 7 shows a case where, when the speaker has made the utterance of "I want to bring the document to him," the result of speech recognition is "I want to ring the document to him," that is, a case where an error has occurred in the portion of "ring" of the result of speech recognition.

For example, as shown in the portion of "ring" of FIG. 7, the information processing apparatus according to the present embodiment causes the portion where it is determined that a factor derived from speech recognition processing exists, to be highlighted by color-coding the portion where it is determined that the utterance is hard to recognize and the other portions, adding an icon including a character string serving as a hint for improvement to the portion where it is determined that the utterance is hard to recognize, or the like.

Note that it goes without saying that examples in a case of visually notifying that there is a possibility that an error will have occurred in speech recognition due to the utterance being hard to recognize are not limited to the example shown in FIG. 7.

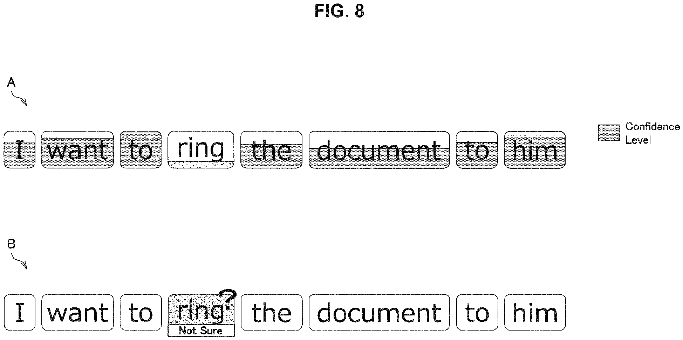

FIG. 8 is an explanatory diagram showing a third example of notification of a factor derived from speech recognition processing according to the present embodiment, and shows an example in a case of visually notifying that there is a possibility that an error will have occurred in speech recognition due to the degree of confidence of the result of speech recognition being low.

FIG. 8 shows a case where, when the speaker has made the utterance of "I want to bring the document to him," the result of speech recognition is "I want to ring the document to him," that is, a case where an error has occurred in the portion of "ring" of the result of speech recognition.

As shown in A of FIG. 8, the information processing apparatus according to the present embodiment causes the degree of confidence of the result of speech recognition ("Confidence Level" shown in A of FIG. 8) to be displayed for each phrase, for example. A of FIG. 8 shows an example in which the degree of confidence of the result of speech recognition is expressed by the size of a colored region.

For example, as shown in the portion of "ring" of A of FIG. 8, the information processing apparatus according to the present embodiment causes the size of a region showing the degree of confidence in the portion where it is determined that the degree of confidence is low, to be displayed to be smaller than the size of a region showing the degree of confidence in the other portions, and thereby visually notifies that there is a possibility that an error will have occurred in the speech recognition due to the degree of confidence of the result of speech recognition being low.

Further, for example as shown in the portion of "ring" of B of FIG. 8, the information processing apparatus according to the present embodiment may cause the portion where it is determined that a factor derived from speech recognition processing exists, to be highlighted by color-coding the portion where it is determined that the degree of confidence of the result of speech recognition is low and the other portions, adding an icon including a character string serving as a hint for improvement to the portion where it is determined that the degree of confidence of the result of speech recognition is low, or the like.

Note that it goes without saying that examples in a case of visually notifying that there is a possibility that an error will have occurred in speech recognition due to the degree of confidence of the result of speech recognition being low are not limited to the examples shown in FIG. 8.

### [2-5] Fifth example of processing according to information processing method

The information processing apparatus according to the present embodiment may perform two or more pieces of processing among processing according to the first example shown in [2-1] above to processing according to the fourth example shown in [2-4] above.

Here, when the information processing apparatus according to the present embodiment performs two or more pieces of processing among processing according to the first example shown in [2-1] above to processing according to the fourth example shown in [2-4] above, an event in which a plurality of factors are determined by the determination processing mentioned above may occur.

In a case where a plurality of factors are determined like the above, the information processing apparatus according to the present embodiment performs notification control processing according to a fifth example shown below, notification control processing according to a sixth example shown below, or notification control processing according to a seventh example shown below, for example.

### [2-5-1] Fifth example of notification control processing

The information processing apparatus according to the present embodiment causes all determined factors to be notified while being synchronized.

By all factors being notified while being synchronized, the speaker who has received the notification can grasp a plurality of factors with one image (in a case of being visually notified), and further can grasp a plurality of factors with one voice (in a case of being auditorily notified), for example.

### [2-5-2] Sixth example of notification control processing

The information processing apparatus according to the present embodiment selects one factor from a plurality of factors, and causes the selected factor to be notified.

The information processing apparatus according to the present embodiment selects a factor of which the frequency of being determined is higher or a factor that is determined latest, on the basis of history information in which a history of determined factors is recorded, for example. Note that, in a case where there are a plurality factors of the same frequency, the information processing apparatus according to the present embodiment selects a factor in accordance with a set rule, such as random selection from factors of the same frequency.

Here, the history information may be history information in which a history for each speaker is recorded, or may be history information in which histories of a plurality of speakers are recorded. The history information is stored in a recording medium such as a storage unit (described later) included in the information processing apparatus according to the present embodiment, for example.

Further, in a case where, after a selected factor is caused to be notified, an utterance is made and factors are determined once more for a result of speech recognition corresponding to the utterance by the determination processing mentioned above, the information processing apparatus according to the present embodiment selects once more a factor that is other than the already selected factor and of which the frequency of being determined is higher, for example. Then, the information processing apparatus according to the present embodiment causes the selected factor to be notified once more.

In a case where a plurality of factors exist, the information processing apparatus according to the present embodiment selects factors from the plurality of factors one by one and causes the selected factors to be notified one by one, in the above manner. Hence, the speaker who has received the notifications can alter a result of speech recognition while grasping the factors one by one.

### [2-5-3] Seventh example of notification control processing

The information processing apparatus according to the present embodiment causes a plurality of factors to be notified while being switched.

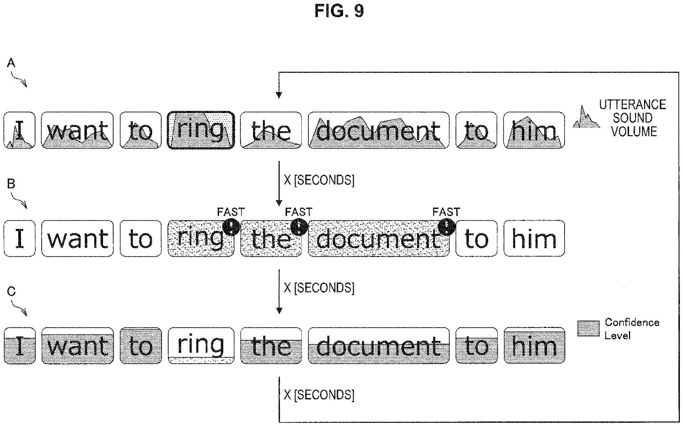

FIG. 9 is an explanatory diagram showing an example of notification of a plurality of factors according to the present embodiment, and shows an example in a case where a plurality of factors are caused to be visually notified while being switched. More specifically, FIG. 9 shows an example in which notification of a factor derived from sound volume shown in B of FIG. 1 (A of FIG. 9), notification of a factor derived from utterance speed shown in FIG. 4 (B of FIG. 9), and notification of a factor derived from speech recognition processing shown in A of FIG. 8 (C of FIG. 9) are caused to be visually notified while being switched.

The information processing apparatus according to the present embodiment causes a plurality of factors to be notified while being switched every time a set time elapses, for example.

The set time may be a fixed time that is set in advance, such as 3 [seconds], or may be a variable time that can change on the basis of manipulation or the like by the user or the like of the information processing apparatus according to the present embodiment.

Note that, although FIG. 9 shows an example in which a plurality of factors are switched every X [seconds] (X being a positive integer), the time up to switching to the next factor may be a time that is set for each factor that is left to be notified. That is, the time up to switching to the next factor may be the same between all the factors or some factors, or may be different between factors, for example.

### [3] Specific example of processing according to information processing method according to present embodiment

Next, an example of processing according to the information processing method according to the present embodiment described above is shown.

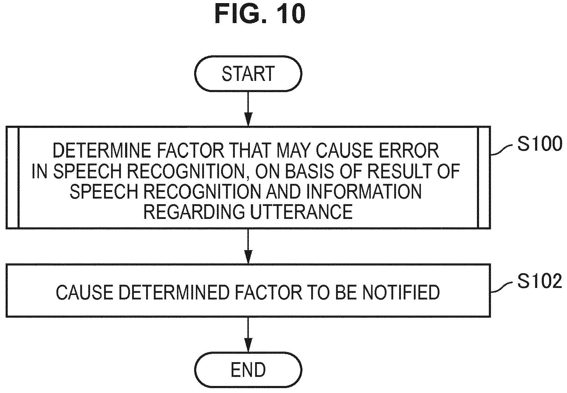

FIG. 10 is a flow chart showing an example of processing according to the information processing method according to the present embodiment.

The information processing apparatus according to the present embodiment determines a factor that may cause an error in speech recognition, on the basis of a result of speech recognition and information regarding an utterance (S100). In step S100, the information processing apparatus according to the present embodiment performs one or two or more of the determination processing according to the first example shown in [2-1-1] above to the determination processing according to the fourth example shown in [2-4-1] above, for example.

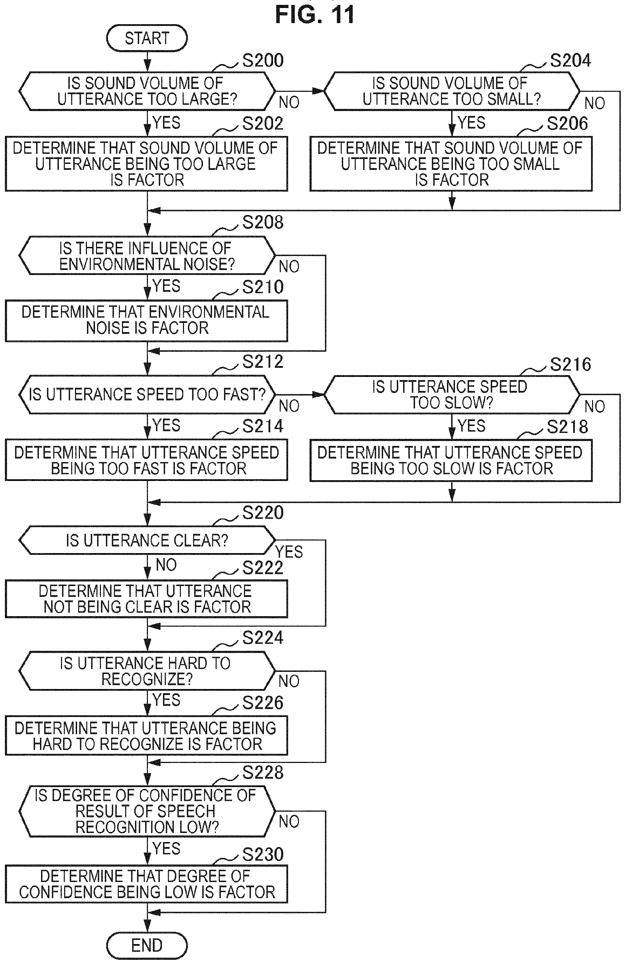

FIG. 11 is a flow chart showing an example of processing according to the information processing method according to the present embodiment, and shows an example of the processing of step S100 of FIG. 10. Here, FIG. 11 shows an example of processing in a case where the determination processing according to the first example shown in [2-1-1] above to the determination processing according to the fourth example shown in [2-4-1] above are performed.

The information processing apparatus according to the present embodiment determines whether the sound volume of an utterance is too large or not (S200). The information processing apparatus according to the present embodiment determines whether the sound volume of an utterance is too large or not by, for example, performing the determination processing according to the first example shown in [2-1-1] above.

In a case where in step S200 it is determined that the sound volume of the utterance is too large, the information processing apparatus according to the present embodiment determines that the sound volume of the utterance being too large is a factor (S202). Then, the information processing apparatus according to the present embodiment performs the processing of step S208 described later.

Further, in a case where in step S200 it is not determined that the sound volume of the utterance is too large, the information processing apparatus according to the present embodiment determines whether the sound volume of the utterance is too small or not (S204). The information processing apparatus according to the present embodiment determines whether the sound volume of the utterance is too small or not by, for example, performing the determination processing according to the first example shown in [2-1-1] above.

In a case where in step S204 it is not determined that the sound volume of the utterance is too small, the information processing apparatus according to the present embodiment performs the processing of step S208 described later.

Further, in a case where in step S204 it is determined that the sound volume of the utterance is too small, the information processing apparatus according to the present embodiment determines that the sound volume of the utterance being too small is a factor (S206).

In a case where the processing of step S202 has been performed, in a case where the processing of step S206 has been performed, or in a case where in step S204 it is not determined that the sound volume of the utterance is too small, the information processing apparatus according to the present embodiment determines whether there is influence of environmental noise or not (S208). The information processing apparatus according to the present embodiment determines whether there is influence of environmental noise or not by, for example, performing the determination processing according to the second example shown in [2-2-1] above to determine whether a factor derived from environmental noise exists or not.

In a case where in step S208 it is not determined that there is influence of environmental noise, the information processing apparatus according to the present embodiment performs the processing of step S212 described later.

Further, in a case where in step S208 it is determined that there is influence of environmental noise, the information processing apparatus according to the present embodiment determines that a factor derived from environmental noise exists (S210).

In a case where the processing of step S210 has been performed or in a case where in step S208 it is not determined that there is influence of environmental noise, the information processing apparatus according to the present embodiment determines whether utterance speed is too fast or not (S212). The information processing apparatus according to the present embodiment determines whether utterance speed is too fast or not by, for example, performing the determination processing according to the third example shown in [2-3-1] above.

In a case where in step S212 it is determined that utterance speed is too fast, the information processing apparatus according to the present embodiment determines that utterance speed being too fast is a factor (S214). Then, the information processing apparatus according to the present embodiment performs the processing of step S220 described later.

Further, in a case where in step S212 it is not determined that utterance speed is too fast, the information processing apparatus according to the present embodiment determines whether utterance speed is too slow or not (S216). The information processing apparatus according to the present embodiment determines whether utterance speed is too slow or not by, for example, performing the determination processing according to the third example shown in [2-3-1] above.

In a case where in step S216 it is not determined that utterance speed is too slow, the information processing apparatus according to the present embodiment performs the processing of step S220 described later.

Further, in a case where in step S216 it is determined that utterance speed is too slow, the information processing apparatus according to the present embodiment determines that utterance speed being too slow is a factor (S218).

In a case where the processing of step S214 has been performed, in a case where the processing of step S218 has been performed, or in a case where in step S216 it is not determined that utterance speed is too slow, the information processing apparatus according to the present embodiment determines whether the utterance is clear or not (S220). The information processing apparatus according to the present embodiment determines whether the utterance is clear or not by, for example, performing the determination processing according to the fourth example shown in [2-4-1] above.

In a case where in step S220 it is not determined that the utterance is clear, the information processing apparatus according to the present embodiment performs the processing of step S224 described later.

Further, in a case where in step S220 it is determined that the utterance is clear, the information processing apparatus according to the present embodiment determines that the utterance not being clear is a factor (S222).

In a case where the processing of step S222 has been performed or in a case where in step S220 it is not determined that the utterance is clear, the information processing apparatus according to the present embodiment determines whether the utterance is hard to recognize or not (S224). The information processing apparatus according to the present embodiment determines whether the utterance is hard to recognize or not by, for example, performing the determination processing according to the fourth example shown in [2-4-1] above.

In a case where in step S224 it is not determined that the utterance is hard to recognize, the information processing apparatus according to the present embodiment performs the processing of step S228 described later.

Further, in a case where in step S224 it is determined that the utterance is hard to recognize, the information processing apparatus according to the present embodiment determines that the utterance being hard to recognize is a factor (S226).

In a case where the processing of step S226 has been performed or in a case where in step S224 it is not determined that the utterance is hard to recognize, the information processing apparatus according to the present embodiment determines whether the degree of confidence of the result of speech recognition is low or not (S228). The information processing apparatus according to the present embodiment determines whether the degree of confidence of the result of speech recognition is low or not by, for example, performing the determination processing according to the fourth example shown in [2-4-1] above.

In a case where in step S228 it is not determined that the degree of confidence of the result of speech recognition is low, the information processing apparatus according to the present embodiment ends the processing shown in FIG. 11.

Further, in a case where in step S228 it is determined that the degree of confidence of the result of speech recognition is low, the information processing apparatus according to the present embodiment determines that the degree of confidence of the result of speech recognition being low is a factor (S230). Then, the information processing apparatus according to the present embodiment ends the processing shown in FIG. 11.

The information processing apparatus according to the present embodiment performs the processing shown in FIG. 11 as the processing of step S100 of FIG. 10, for example.

Note that the processing of step S100 of FIG. 10 is not limited to the example shown in FIG. 11. As described above, in step S100 the information processing apparatus according to the present embodiment may perform one or two or more of the determination processing according to the first example shown in [2-1-1] above to the determination processing according to the fourth example shown in [2-4-1] above, for example. Further, for example, in a case of performing a plurality of pieces of processing among the determination processing according to the first example shown in [2-1-1] above to the determination processing according to the fourth example shown in [2-4-1] above, the information processing apparatus according to the present embodiment may perform these pieces of processing in an arbitrary order.

An example of processing according to the information processing method according to the present embodiment will now be described with reference to FIG. 10 again. The information processing apparatus according to the present embodiment causes the factor determined in step S100 to be notified (S102). In step S102, the information processing apparatus according to the present embodiment causes one or two or more factors to be visually notified by, for example, performing one or two or more of the notification control processing according to the first example shown in [2-1-2] above to the notification control processing according to the seventh example shown in [2-5-3] above. Further, the information processing apparatus according to the present embodiment may cause one or two or more factors to be auditorily notified by, for example, causing a voice or the like showing the determined factor to be outputted from a voice output device.

The information processing apparatus according to the present embodiment performs the processing shown in FIG. 10 as processing according to the information processing method according to the present embodiment, for example.

Here, in the processing shown in FIG. 10, the determination processing mentioned above is performed in step S100, and the notification control processing mentioned above is performed in step S102. Hence, for example, convenience for the speaker can be improved by the processing shown in FIG. 10 being performed. Further, for example, effects exhibited by processing according to the information processing method according to the present embodiment described above are exhibited by the processing shown in FIG. 10 being performed.

### [4] Example of effect exhibited by information processing method according to present embodiment being used

The effects shown below are exhibited by the information processing apparatus according to the present embodiment performing processing according to the information processing method according to the present embodiment, for example. Note that it goes without saying that the effect exhibited by the information processing method according to the present embodiment being used is not limited to the effects shown below.
- The speaker can be notified of how the speaker should alter the utterance way, by notification content in accordance with the result of determination of a factor that may cause an error in speech recognition, such as the sound collection state at the time when voice input is executed or the state of speech recognition processing, being caused to be displayed on a user interface (UI) displayed on a display screen.
- The speaker can alter an error in speech recognition more easily by being notified of how the speaker should alter the utterance way. Hence, the speaker can obtain a more accurate result of speech recognition.
- The finding of an error by the speaker can be made faster because a place where there is a possibility that an error will have occurred in a result of speech recognition is clearly shown by notification content in accordance with the result of determination of a factor that may cause an error in speech recognition being displayed on an UI.

### (Information processing apparatus according to present embodiment)

Next, an example of the configuration of the information processing apparatus according to the present embodiment that can perform processing according to the information processing method according to the present embodiment described above is described.

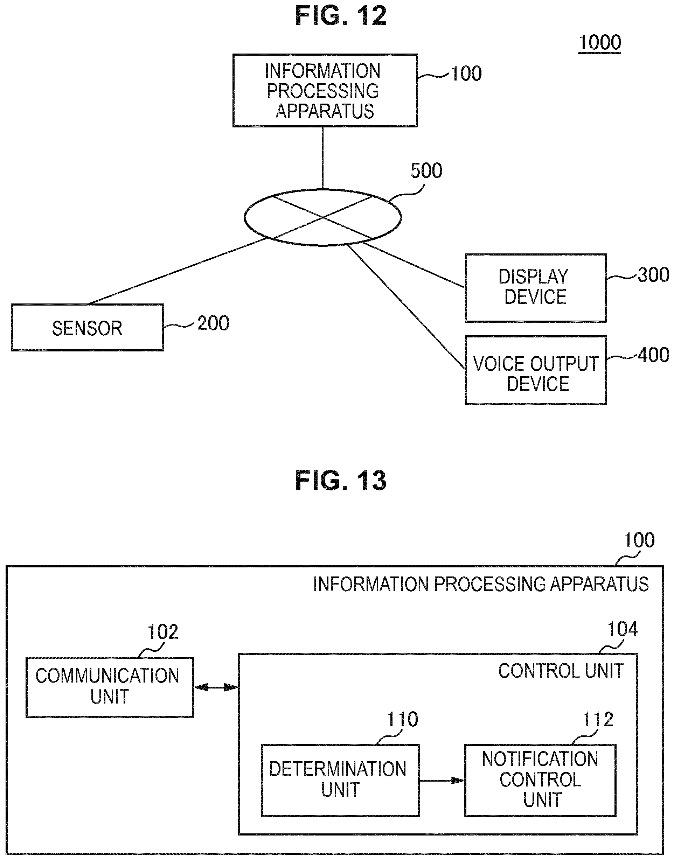

FIG. 12 is an explanatory diagram showing an example of an information processing system 1000 according to the present embodiment including an information processing apparatus 100 according to the present embodiment.

The information processing system 1000 includes, for example, the information processing apparatus 100, a sensor 200, a display device 300, and a voice output device 400.

Further, the information processing apparatus 100 and each of the sensor 200, the display device 300, and the voice output device 400 are connected together in a wireless or wired manner via a network 500, for example. Examples of the network 500 include wired networks such as a local area network (LAN) and a wide area network (WAN), wireless networks such as a wireless local area network (wireless LAN, WLAN), the Internet using a communication protocol such as the Transmission Control Protocol/Internet Protocol (TCP/IP), etc. Note that, in the information processing system according to the present embodiment, the information processing apparatus 100 and each of the sensor 200, the display device 300, and the voice output device 400 may directly communicate with each other without using the network 500.

The information processing apparatus 100 performs processing according to the information processing method according to the present embodiment described above. An example of the configuration of the information processing apparatus 100 is described later.

The sensor 200 includes, for example, a voice input device such as a microphone or a microphone array. Further, the sensor 200 may include other sensors such as a distance sensor and an imaging device. A signal generated by the sensor 200, such as an audio signal including an uttered voice of a speaker, is transmitted to the information processing apparatus 100 by a communication device included in the sensor 200 or an external communication device connected to the sensor 200, for example.

The display device 300 displays various screens on a display screen. The information processing apparatus 100 causes a determined factor to be visually notified by, for example, transmitting a control signal including a display instruction and data showing notification content to the display device 300, like in the examples shown in FIG. 1 to FIG. 9.

Examples of the display device 300 include a liquid crystal display, an organic electroluminescence display (an organic EL display, also called an organic light emitting diode display (an OLED display)), and the like.

The voice output device 400 outputs various voices (including music). The information processing apparatus 100 causes a determined factor to be auditorily notified by, for example, transmitting a control signal including an output instruction and voice data showing notification content to the voice output device 400.

Examples of the voice output device 400 include a loudspeaker and the like.

Note that the configuration of the information processing system according to the present embodiment is not limited to the example shown in FIG. 12.

For example, the information processing system according to the present embodiment may be a configuration not including both of the display device 300 and the voice output device 400 shown in FIG. 12. Even by the configuration not including both of the display device 300 and the voice output device 400, notification of a determined factor by the information processing apparatus 100 is performed in the information processing system according to the present embodiment.

Further, in the information processing system according to the present embodiment, two or more of the sensor 200, the display device 300, and the voice output device 400 shown in FIG. 12 may be provided in one apparatus.

Further, although FIG. 12 shows an example in which the information processing apparatus 100 and each of the sensor 200, the display device 300, and the voice output device 400 are connected together via the network 500, it is possible for the information processing apparatus according to the present embodiment to include the sensor 200, the display device 300, and the voice output device 400 shown in FIG. 12. That is, the information processing apparatus according to the present embodiment may perform notification of a factor performed in the information processing system 1000 shown in FIG. 12 (including configurations according to modification examples) in a stand-alone manner, for example. Use examples of the information processing apparatus according to the present embodiment are described later.

Hereinbelow, an example of the configuration of the information processing apparatus according to the present embodiment is described using the information processing apparatus 100 included in the information processing system 1000 shown in FIG. 12 as an example.

FIG. 13 is a block diagram showing an example of the configuration of the information processing apparatus 100 according to the present embodiment. The information processing apparatus 100 includes, for example, a communication unit 102 and a control unit 104.

Further, the information processing apparatus 100 may include, for example, a read-only memory (ROM, not illustrated), a random access memory (RAM, not illustrated), a storage unit (not illustrated), a manipulation unit (not illustrated) that the user of the information processing apparatus 100 can manipulate, a display unit (not illustrated) that displays various screens on a display screen, etc. The information processing apparatus 100 connects the constituent elements mentioned above together by means of a bus as a data sending path, for example.

The ROM (not illustrated) stores data for control such as programs and operating parameters to be used by the control unit 104. The RAM (not illustrated) temporarily stores programs etc. to be executed by the control unit 104.

The storage unit (not illustrated) is a storage means included in the information processing apparatus 100, and stores various data such as data related to the information processing method according to the present embodiment, such as a table (or a database) in which IDs corresponding to speakers and thresholds are associated together, and various applications, for example. Here, examples of the storage unit (not illustrated) include magnetic recording media such as a hard disk, nonvolatile memories such as a flash memory, etc. Further, the storage unit (not illustrated) may be attachable to and detachable from the information processing apparatus 100.

As the manipulation unit (not illustrated), a manipulation input device described later is given. Further, as the display unit (not illustrated), a display device described later is given.

### [Hardware configuration example of information processing apparatus 100]

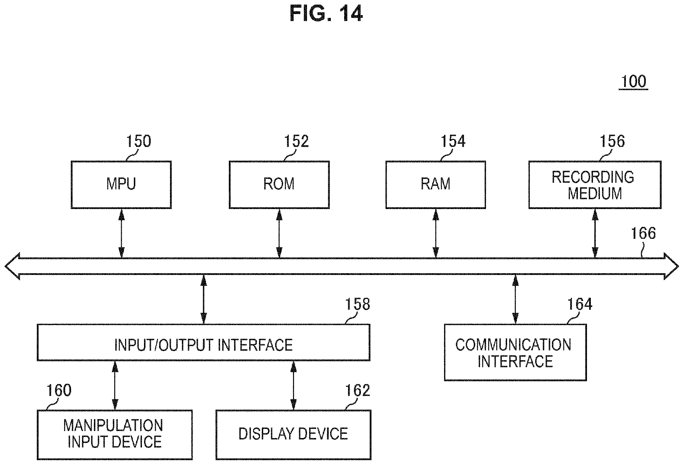

FIG. 14 is an explanatory diagram showing an example of the hardware configuration of the information processing apparatus 100 according to the present embodiment. The information processing apparatus 100 includes, for example, an MPU 150, a ROM 152, a RAM 154, a recording medium 156, an input/output interface 158, a manipulation input device 160, a display device 162, and a communication interface 164. Further, the information processing apparatus 100 connects the constituent elements together by means of a bus 166 as a data sending path, for example. Further, the information processing apparatus 100 is driven by electric power supplied from an inside power source such as a battery included in the information processing apparatus 100, electric power supplied from an external power source connected, or the like, for example.

The MPU 150 includes, for example, one or two or more processors including an arithmetic circuit such as a micro processing unit (MPU), various processing circuits, etc., and functions as the control unit 104 that controls the entire information processing apparatus 100. Further, in the information processing apparatus 100, the MPU 150 plays the role of a determination unit 110 and a notification control unit 112 described later, for example. Note that one or both of the determination unit 110 and the notification control unit 112 may include a dedicated (or general-purpose) circuit (for example, a processor or the like provided separately from the MPU 150) that can perform the processing of the respective part.

The ROM 152 stores data for control such as programs and operating parameters to be used by the MPU 150, etc. The RAM 154 temporarily stores programs to be executed by the MPU 150, etc., for example.

The recording medium 156 functions as a storage unit (not illustrated), and stores various data such as data related to the information processing method according to the present embodiment, such as a table in which IDs corresponding to speakers and thresholds are associated together, and various applications, for example. Here, examples of the recording medium 156 include magnetic recording media such as a hard disk and nonvolatile memories such as a flash memory. Further, the recording medium 156 may be attachable to and detachable from the information processing apparatus 100.

The input/output interface 158 connects the manipulation input device 160 and the display device 162, for example. The manipulation input device 160 functions as a manipulation unit (not illustrated), and further the display device 162 functions as a display unit (not illustrated). Here, examples of the input/output interface 158 include a Universal Serial Bus (USB) terminal, a Digital Visual Interface (DVI) terminal, a High-Definition Multimedia Interface (HDMI) (registered trademark) terminal, various processing circuits, etc.

Further, the manipulation input device 160 is provided on the information processing apparatus 100, and is connected to the input/output interface 158 in the inside of the information processing apparatus 100, for example. Examples of the manipulation input device 160 include buttons, arrow keys, and rotary selectors such as a jog dial, a combination of these, etc.

Further, the display device 162 is provided on the information processing apparatus 100, and is connected to the input/output interface 158 in the inside of the information processing apparatus 100, for example. Examples of the display device 162 include a liquid crystal display, an organic EL display, and the like.

Note that it goes without saying that the input/output interface 158 may be connected to external devices such as manipulation input devices (for example, a keyboard, a mouse, etc.) outside the information processing apparatus 100 and external display devices. Further, the display device 162 may be a device that allows display and the user's manipulation, such as a touch panel, for example.

The communication interface 164 is a communication means included in the information processing apparatus 100, and functions as the communication unit 102 for performing communication with external devices such as the sensor 200 and external apparatuses in a wireless or wired manner via the network 500 (or directly), for example. Here, examples of the communication interface 164 include a communication antenna and a radio frequency (RF) circuit (wireless communication), an IEEE 802.15.1 port and a transmission and reception circuit (wireless communication), an IEEE 802.11 port and a transmission and reception circuit (wireless communication), a local area network (LAN) terminal and a transmission and reception circuit (wired communication), etc. Further, the communication interface 164 may be an arbitrary configuration adapted to the network 500.

The information processing apparatus 100 performs processing according to the information processing method according to the present embodiment by means of the configuration shown in FIG. 14, for example. Note that the hardware configuration of the information processing apparatus 100 according to the present embodiment is not limited to the configuration shown in FIG. 14.

For example, the information processing apparatus 100 may not include the communication interface 164 in a case where the information processing apparatus 100 performs communication with an external apparatus or the like via an external communication device connected. Further, the communication interface 164 may be a configuration that can perform communication with one or two or more external apparatuses or the like by means of a plurality of communication systems.

Further, the information processing apparatus 100 may have a configuration not including the recording medium 156, the manipulation input device 160, or the display device 162, for example.

Further, the information processing apparatus 100 may have a configuration in accordance with use examples of the information processing apparatus 100 described later, for example.

Further, part or the whole of the configuration shown in FIG. 14 (or configurations according to modification examples) may be obtained by one or two or more integrated circuits (ICs), for example.

An example of the configuration of the information processing apparatus 100 will now be described with reference to FIG. 13 again. The communication unit 102 is a communication means included in the information processing apparatus 100, and performs communication with external devices such as the sensor 200 and external apparatuses in a wireless or wired manner via the network 500 (or directly). Further, the communication of the communication unit 102 is controlled by the control unit 104, for example.

Here, examples of the communication unit 102 include a communication antenna and an RF circuit, a LAN terminal and a transmission and reception circuit, etc., but the configuration of the communication unit 102 is not limited to the above. For example, the communication unit 102 may have a configuration adapted to an arbitrary standard that can perform communication, such as a USB terminal and a transmission and reception circuit, or an arbitrary configuration that can communicate with external apparatuses via the network 500. Further, the communication unit 102 may be a configuration that can perform communication with one or two or more external apparatuses or the like by means of a plurality of communication systems.

The control unit 104 includes, for example, an MPU or the like, and plays the role of controlling the entire information processing apparatus 100. Further, the control unit 104 includes, for example, a determination unit 110 and a notification control unit 112, and plays the role of principally performing processing according to the information processing method according to the present embodiment. Furthermore, the control unit 104 can also perform various pieces of processing such as speech recognition processing, signal processing related to the estimation of environmental noise, and signal processing that estimates characteristics of an utterance.

The determination unit 110 plays the role of principally performing the determination processing mentioned above, and determines a factor that may cause an error in speech recognition, on the basis of a result of speech recognition and information regarding an utterance.

The determination unit 110 performs one or two or more of the determination processing according to the first example shown in [2-1-1] above to the determination processing according to the fourth example shown in [2-4-1] above, for example.

The notification control unit 112 plays the role of principally performing the notification control processing mentioned above, and causes a factor determined in the determination unit 110 to be notified.

The notification control unit 112 causes one or two or more factors to be visually notified by, for example, performing one or two or more of the notification control processing according to the first example shown in [2-1-2] above to the notification control processing according to the seventh example shown in [2-5-3] above. Further, the notification control unit 112 causes one or two or more factors to be auditorily notified by, for example, causing a voice or the like showing the determined factor to be outputted from a voice output device. Furthermore, the notification control unit 112 may cause a determined factor to be notified by both visual notification and auditory notification, for example.

The information processing apparatus 100 performs processing according to the information processing method according to the present embodiment by means of the configuration shown in FIG. 13, for example. Therefore, the information processing apparatus 100 can improve convenience for the speaker by means of the configuration shown in FIG. 13, for example.

Further, the information processing apparatus 100 can exhibit effects exhibited by processing according to the information processing method according to the present embodiment like that described above being performed, by means of the configuration shown in FIG. 13, for example.

Note that the configuration of the information processing apparatus according to the present embodiment is not limited to the configuration shown in FIG. 13.

For example, the information processing apparatus according to the present embodiment may include one or both of the determination unit 110 and the notification control unit 112 shown in FIG. 13 separately from the control unit 104 (for example, obtain one or both of the determination unit 110 and the notification control unit 112 by means of another processing circuit).

Further, the configuration for performing processing according to the information processing method according to the present embodiment is not limited to the configuration shown in FIG. 13, and may be a configuration in accordance with the way of division of processing according to the information processing method according to the present embodiment.

Further, for example, the information processing apparatus according to the present embodiment may not include the communication unit 102 in a case where the information processing apparatus performs communication with external apparatuses via an external communication device having a function and a configuration similar to those of the communication unit 102.

Although in the above the present embodiment is described using an information processing apparatus, the present embodiment is not limited to this form. The present embodiment can be applied to, for example, various devices that can perform processing according to the information processing method according to the present embodiment, such as "computers such as personal computers (PCs) and servers," "head-mounted displays," "eyewear-type wearable devices," "various wearable devices used by being mounted on the user's body, such as watch-type devices and bracelet-type devices," "communication devices such as smartphones," "tablet-type devices," "game machines," and "mobile bodies such as bicycles, automobiles, and two-wheel electric standing scooters." Further, the present embodiment can be applied to processing ICs that can be incorporated in devices like the above, for example.

Further, the information processing apparatus according to the present embodiment may be used for a processing system in which connection to a network (or communication between apparatuses) is a presupposition, for example like in cloud computing or the like. Examples of the processing system in which processing according to the information processing method according to the present embodiment is performed include "a system in which part of the processing according to the information processing method according to the present embodiment is performed by one apparatus included in a processing system and processing other than the above-mentioned part of the processing according to the information processing method according to the present embodiment is performed by another apparatus included in the processing system," and the like.

### (Program according to present embodiment)

Convenience for the speaker can be improved by a program for causing a computer system to function as the information processing apparatus according to the present embodiment (for example, a program capable of executing processing according to the information processing method according to the present embodiment, such as the determination processing mentioned above and the notification control processing mentioned above) being executed by a processor or the like in the computer system. Here, a single computer or a plurality of computers are given as the computer system according to the present embodiment. By the computer system according to the present embodiment, a series of processing according to the information processing method according to the present embodiment is performed.

Further, a program for causing a computer system to function as the information processing apparatus according to the present embodiment is executed by a processor or the like in the computer system, and thereby effects exhibited by processing according to the information processing method according to the present embodiment described above can be exhibited.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, although in the above it is shown that a program (a computer program) for causing a computer system to function as the information processing apparatus according to the present embodiment is provided, the present embodiment can further provide a recording medium in which the program mentioned above is allowed to be stored.

The configuration described above shows an example of the present embodiment, and is within the technical scope of the present disclosure, as a matter of course.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a determination unit configured to determine a factor that possibly causes an error in speech recognition, on the basis of a result of the speech recognition and information regarding an utterance; and
   a notification control unit configured to cause the determined factor to be notified.
(2) The information processing apparatus according to (1),
   in which the determination unit determines the factor for each of prescribed units in the result of the speech recognition.
(3) The information processing apparatus according to (2),
   in which the notification control unit causes the determined factor to be notified for each of the prescribed units.
(4) The information processing apparatus according to any one of (1) to (3),
   in which the information regarding an utterance includes information showing sound volume of an utterance, and
   the determination unit determines the factor derived from sound volume on the basis of the information showing the sound volume of the utterance.
(5) The information processing apparatus according to (4),
   in which the determination unit determines, as the factor, the sound volume being too large.
(6) The information processing apparatus according to (4) or (5),
   in which the determination unit determines, as the factor, the sound volume being too small.
(7) The information processing apparatus according to any one of (1) to (6),
   in which the information regarding an utterance includes information showing environmental noise, and
   the determination unit determines the factor derived from environmental noise on the basis of the information showing the environmental noise.
(8) The information processing apparatus according to (7),
   in which the information regarding an utterance further includes information showing sound volume of an utterance, and
   the determination unit determines the factor derived from environmental noise on the basis of the information showing the sound volume of the utterance and the information showing the environmental noise.
(9) The information processing apparatus according to any one of (1) to (8),
   in which the information regarding an utterance includes information showing utterance speed, and
   the determination unit determines the factor derived from utterance speed on the basis of the information showing the utterance speed.
(10) The information processing apparatus according to (9),
   in which the determination unit determines the factor derived from utterance speed by comparing the utterance speed shown by the information showing the utterance speed and a standard value of utterance speed.
(11) The information processing apparatus according to (10),
   in which the standard value is one of a value associated with a speaker, a value settled on the basis of an attribute of the speaker, and a value independent of the speaker.
(12) The information processing apparatus according to any one of (1) to (11),
   in which the information regarding an utterance includes information regarding speech recognition processing corresponding to the result of the speech recognition, and
   the determination unit determines the factor derived from the speech recognition processing on the basis of the information regarding the speech recognition.
(13) The information processing apparatus according to (12),
   in which the determination unit determines, as the factor, an utterance not being clear.
(14) The information processing apparatus according to (12) or (13),
   in which the determination unit determines, as the factor, an utterance being hard to recognize.
(15) The information processing apparatus according to any one of (12) to (14),
   in which the determination unit determines, as the factor, a degree of confidence of a result of speech recognition being low.
(16) The information processing apparatus according to any one of (1) to (15),
   in which the notification control unit causes the factor to be visually notified.
(17) The information processing apparatus according to any one of (1) to (16),
   in which the notification control unit causes the factor to be auditorily notified.
(18) The information processing apparatus according to any one of (1) to (17),
   in which, in a case where a plurality of the factors are determined, the notification control unit selects one factor from the plurality of factors, and causes the selected factor to be notified.
(19) The information processing apparatus according to any one of (1) to (18),
   in which, in a case where a plurality of the factors are determined, the notification control unit causes the plurality of factors to be notified while being switched.
(20) An information processing method to be executed by an information processing apparatus,
   the information processing method including:
   a step of determining a factor that possibly causes an error in speech recognition, on the basis of a result of the speech recognition and information regarding an utterance; and
   a step of causing the determined factor to be notified.

### Reference Signs List

- 100: information processing apparatus
- 102: communication unit
- 104: control unit
- 110: determination unit
- 112: notification control unit
- 200: sensor
- 300: display device
- 400: voice output device
- 500: network
- 1000: information processing system

## Claims

1. An information processing apparatus comprising:
a determination unit configured to determine a factor that possibly causes an error in speech recognition, on a basis of a result of the speech recognition and information regarding an utterance; and
a notification control unit configured to cause the determined factor to be notified.

2. The information processing apparatus according to claim 1,
wherein the determination unit determines the factor for each of prescribed units in the result of the speech recognition.

3. The information processing apparatus according to claim 2,
wherein the notification control unit causes the determined factor to be notified for each of the prescribed units.

4. The information processing apparatus according to claim 1,
wherein the information regarding an utterance includes information showing sound volume of an utterance, and
the determination unit determines the factor derived from sound volume on a basis of the information showing the sound volume of the utterance.

5. The information processing apparatus according to claim 4,
wherein the determination unit determines, as the factor, the sound volume being too large.

6. The information processing apparatus according to claim 4,
wherein the determination unit determines, as the factor, the sound volume being too small.

7. The information processing apparatus according to claim 1,
wherein the information regarding an utterance includes information showing environmental noise, and
the determination unit determines the factor derived from environmental noise on a basis of the information showing the environmental noise.

8. The information processing apparatus according to claim 7,
wherein the information regarding an utterance further includes information showing sound volume of an utterance, and
the determination unit determines the factor derived from environmental noise on a basis of the information showing the sound volume of the utterance and the information showing the environmental noise.

9. The information processing apparatus according to claim 1,
wherein the information regarding an utterance includes information showing utterance speed, and
the determination unit determines the factor derived from utterance speed on a basis of the information showing the utterance speed.

10. The information processing apparatus according to claim 9,
wherein the determination unit determines the factor derived from utterance speed by comparing the utterance speed shown by the information showing the utterance speed and a standard value of utterance speed.

11. The information processing apparatus according to claim 10,
wherein the standard value is one of a value associated with a speaker, a value settled on a basis of an attribute of the speaker, and a value independent of the speaker.

12. The information processing apparatus according to claim 1,
wherein the information regarding an utterance includes information regarding speech recognition processing corresponding to the result of the speech recognition, and
the determination unit determines the factor derived from the speech recognition processing on a basis of the information regarding the speech recognition.

13. The information processing apparatus according to claim 12,
wherein the determination unit determines, as the factor, an utterance not being clear.

14. The information processing apparatus according to claim 12,
wherein the determination unit determines, as the factor, an utterance being hard to recognize.

15. The information processing apparatus according to claim 12,
wherein the determination unit determines, as the factor, a degree of confidence of a result of speech recognition being low.

16. The information processing apparatus according to claim 1,
wherein the notification control unit causes the factor to be visually notified.

17. The information processing apparatus according to claim 1,
wherein the notification control unit causes the factor to be auditorily notified.

18. The information processing apparatus according to claim 1,
wherein, in a case where a plurality of the factors are determined, the notification control unit selects one factor from the plurality of factors, and causes the selected factor to be notified.

19. The information processing apparatus according to claim 1,
wherein, in a case where a plurality of the factors are determined, the notification control unit causes the plurality of factors to be notified while being switched.

20. An information processing method to be executed by an information processing apparatus,
the information processing method comprising:
a step of determining a factor that possibly causes an error in speech recognition, on a basis of a result of the speech recognition and information regarding an utterance; and
a step of causing the determined factor to be notified.
